(19) **Europäisches Patentamt / European Patent Office / Office européen des brevets**

(11) **EP 4 733 422 A1**

(12) # EUROPEAN PATENT APPLICATION
published in accordance with Art. 153(4) EPC

(43) Date of publication:
**29.04.2026 Bulletin 2026/18**

(21) Application number: **24845434.0**

(22) Date of filing: **11.07.2024**

(51) International Patent Classification (IPC):
**C21B 5/00** *(2006.01)*　　**C21B 13/02** *(2006.01)*

(52) Cooperative Patent Classification (CPC):
**C21B 5/00; C21B 13/02**

(86) International application number:
**PCT/JP2024/025173**

(87) International publication number:
**WO 2025/023053 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.07.2023 JP 2023120548**

(71) Applicant: **JFE Steel Corporation**
**Tokyo, 100-0011 (JP)**

(72) Inventors:
• **KAWASHIRI, Yuki**
**Tokyo 100-0011 (JP)**

• **TAKEHARA, Kenta**
**Tokyo 100-0011 (JP)**
• **HIROSAWA, Toshiyuki**
**Tokyo 100-0011 (JP)**
• **IKEDA, Kohei**
**Tokyo 100-0011 (JP)**
• **SAEKI, Michitoshi**
**Tokyo 100-0011 (JP)**

(74) Representative: **Haseltine Lake Kempner LLP**
**One Portwall Square**
**Portwall Lane**
**Bristol BS1 6BH (GB)**

(54) **METHOD FOR MEASURING GAS REDUCTION RATE, METHOD FOR OPERATING BLAST FURNACE, METHOD FOR OPERATING DIRECT REDUCTION SHAFT FURNACE, AND IRON RAW MATERIAL**

(57)　Provided is a gaseous reduction degree measurement method capable of appropriately measuring the gaseous reduction degree of an iron raw material used in an ironmaking process with consideration given to the influence of stagnation of the reduction reaction. Also provided are a blast furnace operating method, a direct reduction shaft furnace operating method, and an iron raw material.

The gaseous reduction degree measurement method is used to measure the gaseous reduction degree of an iron raw material reduced using a gaseous reducing agent and used in an ironmaking process. The measurement time t (min) for measuring the gaseous reduction degree of the iron raw material is longer than or equal to $t_{ret} \times 0.9$, where $t_{ret}$ is a time calculated from the following formula (1):

$$t_{ret} = 5 \times d/(X_{co} - 2 \times X_{CO2} + 2 \times X_{H2} - 4 \times X_{H2O}) \times \exp(6000/T) \qquad (1)$$

Here, T is reduction temperature in K, and d is the average particle size mm of the iron raw material. $X_{CO}$ is the concentration % of CO in the gaseous reducing agent, and $X_{CO2}$ is the concentration % of $CO_2$ in the gaseous reducing agent. $X_{H2}$ is the concentration % of $H_2$ in the gaseous reducing agent, and $X_{H2O}$ is the concentration % of $H_2O$ in the gaseous reducing agent.

EP 4 733 422 A1

# FIG. 5

$t_{ret}$ DETERMINED FROM TEST CONDITIONS

GASEOUS REDUCTION DEGREE [%]

STAGNANT GASEOUS
REDUCTION DEGREE
(85%)

--- TEST CONDITIONS A
— TEST CONDITIONS B
—·— TEST CONDITIONS C
········ TEST CONDITIONS D

REDUCTION TIME [min]

**Description**

Technical Field

The present invention relates to a method for measuring the gaseous reduction degree of an iron raw material used in an ironmaking process that uses a blast furnace, a direct reduction shaft furnace, etc. and to a blast furnace operating method, a direct reduction shaft furnace operating method, and an iron raw material.

Background Art

The blast furnace process (a molten pig iron production process using a blast furnace) contributes to 70% or more of the crude steel production in Japan. However, in the blast furnace process, a large amount of coal is consumed as a reducing agent to thereby smelt and reduce iron oxides in iron ore. Therefore, the blast furnace process is also a high $CO_2$ emission process. In view of the recent social circumstances regarding environmental issues, reducing $CO_2$ emissions from the blast furnace process and replacing the blast furnace process with another process to reduce $CO_2$ emissions are urgent tasks for the steel industry.

There are several methods for reducing $CO_2$ emissions from the blast furnace process. In one method, hydrogen is used as a gaseous reducing agent. Examples of the proposed means for utilizing hydrogen include: a method in which hydrogen is simply blown from tuyeres together with blast air; a method in which hydrogen in the form of a specific compound (e.g., a hydrocarbon such as methane) is blown from the tuyeres; and a method in which a hydrogen-based reducing gas is blown from a portion other than the tuyeres.

One reason that the $CO_2$ emissions from the blast furnace process can be reduced by blowing a gaseous reducing agent such as hydrogen into the blast furnace is an increase in the gaseous reduction degree of iron oxides in the iron raw material.

The iron raw material charged into the blast furnace is reduced mainly through two processes. The first process is gaseous reduction by a gaseous reducing agent such as CO or hydrogen. The second process is smelting reduction by carbon (C) in coke used as a solid reducing agent. In the blast furnace process, gaseous reduction proceeds while the raw materials (the iron raw material and the solid reducing agent) descend from the upper portion of the blast furnace to the bottom portion. Then the iron raw material that has not been fully reduced by the gaseous reduction is smelted and subjected to smelting reduction by the solid reducing agent, and the reduction reaction is thereby completed.

The difference between the gaseous reduction and the smelting reduction is the amount of heat required for the reduction reaction. The gaseous reduction is a reduction reaction accompanied by slight heat generation (or absorption). In contrast, the smelting reduction is a reduction reaction accompanied by significant heat absorption. By increasing the proportion of the gaseous reduction by the blown gaseous reducing agent (such as hydrogen gas), the proportion of the smelting reduction by the solid reducing agent can be reduced. This allows a reduction in the heat required per ton of molten pig iron in the blast furnace. Therefore, the amount of the solid reducing agent (carbon) used can be reduced, and the $CO_2$ emissions can be reduced.

A potential candidate ironmaking process that can replace the blast furnace process is a direct reduction process (a method for producing reduced iron using a direct reduction shaft furnace). In the direct reduction process, unlike the blast furnace process, the product produced is not molten pig iron but is reduced iron. However, like the blast furnace process, the direct reduction process is an ironmaking process capable of producing iron from the iron raw material.

In the direct reduction process, no coke is used, and the iron raw material is reduced by a preheated gaseous reducing agent. Since hydrogen is used as the gaseous reducing agent, the direct reduction process can be, in principle, an ironmaking process that emits no $CO_2$.

In the direct reduction process, the reduction reaction of the iron raw material proceeds only through gaseous reduction. The product, that is, reduced iron, is melted and smelted in a subsequent electric arc furnace process etc. In this case, when the achieved reduction degree of the reduced iron (its final reduction degree) is low (when ion oxides remain present), problems such as a reduction in the yield of molten steel and damage to refractories occur. The achieved reduction degree of the reduced iron is required to be about 80% to about 90%.

In the direct reduction process, the gaseous reduction degree of the iron raw material can be improved by reducing the passage rate of the iron raw material through the direct reduction shaft furnace to increase the reduction time. However, reducing the passage rate through the furnace causes a reduction in the amount of production.

As described above, in each of the blast furnace process and the direct reduction process in which the gaseous reducing agent (such as hydrogen gas) is blown into the furnace, it is important to increase the proportion of the gaseous reduction of the iron raw material. However, it is known that, even when the gaseous reduction by the gaseous reducing agent is caused to proceed at a temperature (for example, 900°C) at which agglomerated ore (pellets or sintered ore) used as the iron raw material does not melt, the reduction reaction of the agglomerated ore via gaseous reduction stagnates when the reduction reaction reaches a prescribed state (reduction degree: 70%). Specifically, a microstructure that impedes the gaseous reduction is present inside the agglomerated ore, and the reduction reaction via the gaseous reduction stagnates due to the influence of this microstructure. The stagnation of the reduction reaction means that the rate of change in the reduction degree per unit time (the reduction rate) decreases abruptly.

One known method for measuring the gaseous reduction degree of the iron raw material is a method based on "Iron ores - Determination of reducibility by the final degree of reduction index (JIS M 8713:2009)." However, to evaluate the reducibility of the iron raw material by this method, a sample with an average particle size of 20 mm is subjected to a reduction reaction under the conditions of a carbon monoxide (CO) gas of 30%, a nitrogen ($N_2$) gas of 70%, and a temperature of 900°C (1173 K) for 180 minutes, and then the gaseous reduction degree is evaluated. The average evaluation value (reduction degree) under the above conditions is about 60% because the measurement time is short, and therefore the gaseous reduction degree at which stagnation of the reduction reaction occurs (70% or higher) cannot be evaluated.

Although various methods have been proposed to improve the gaseous reduction degrees of iron raw materials, almost no studies have been conducted on a method for avoiding the stagnation of the reduction reaction and a method for measuring an appropriate gaseous reduction degree. Patent Literature 1 discloses a method for preventing stagnation of the reduction reaction in a high-temperature state by adding dolomite or limestone to pellets to increase their melting point. Patent Literature 2 discloses the microstructure of a sintered ore that contains a large amount of $SiO_2$ and can easily undergo a reduction reaction in a high-temperature state while the strength of the sintered ore is maintained.

Citation List

Patent Literature

PTL 1: Japanese Examined Patent Application Publication No. 3-77853
PTL 2: Japanese Patent No. 7035869

Non Patent Literature

NPL 1: TETSU TO HAGANE (Journal of the Iron and Steel Institute of Japan), Vol. 79 (1993) 9, N618
NPL 2: TETSU TO HAGANE (Journal of the Iron and Steel Institute of Japan), Vol. 79 (1993) 10, N711
NPL 3: TETSU TO HAGANE (Journal of the Iron and Steel Institute of Japan), Vol. 73 (1987) 15, p. 1956
NPL 4: TETSU TO HAGANE (Journal of the Iron and Steel Institute of Japan), Vol. 69 (1983) 3, p. 363

Summary of Invention

Technical Problem

However, the method disclosed in Patent Literature 1 is suitable for preventing the stagnation of the reduction reaction when the iron raw material is in a high-temperature state, and it is difficult to apply the method to the stagnation of the reduction reaction in a temperature state in which the smelting of the iron raw material does not start. With the method disclosed in Patent Literature 2, a sintered ore that can easily undergo the reduction reaction can be obtained. However, there is no description about stagnation of the reduction reaction in relation to temperature conditions, and it is therefore difficult to apply this method to the stagnation of the reduction reaction in a temperature state in which the smelting of the iron raw material does not start. Moreover, in Patent Literature 2, the target reduction degree in a high-temperature state is 71% and is comparable to the reduction degree (reduction degree: 70%) at which the stagnation of the reduction reaction via gaseous reduction occurs. This also indicates that, in Patent Literature 2, the stagnation of the reduction reaction via gaseous reduction is not taken into consideration.

The present invention has been made in view of the foregoing circumstances, and it is an object to provide a gaseous reduction degree measurement method that can appropriately measure the gaseous reduction degree of an iron raw material used in the ironmaking process with consideration given to the influence of the stagnation of the reduction reaction and to provide a blast furnace operating method, a direct reduction shaft furnace operating method, and an iron raw material.

Solution to Problem

The present invention aimed to solve the foregoing problems is summarized as follows.

[1] A gaseous reduction degree measurement method for measuring a degree of gaseous reduction of an iron raw material used in an ironmaking process, the gaseous reduction being performed using a gaseous reducing agent, wherein measurement time t (min) for measuring the degree of gaseous reduction of the iron raw material is longer than or equal to $t_{ret} \times 0.9$, where $t_{ret}$ is a time calculated from the following formula (1):

$$t_{ret} = 5 \times d/(X_{CO} - 2 \times X_{CO2} + 2 \times X_{H2} - 4 \times X_{H2O}) \times exp(6000 / T) \tag{1}$$

where T is reduction temperature in K; d is an average particle size mm of the iron raw material; $X_{CO}$ is a concentration % of CO in the gaseous reducing agent; $X_{CO2}$ is a concentration % of $CO_2$ in the gaseous reducing agent; $X_{H2}$ is a concentration % of $H_2$ in the gaseous reducing agent; and $X_{H2O}$ is a concentration % of $H_2O$ in the gaseous reducing agent.

[2] The gaseous reduction degree measurement method according to [1], wherein the measurement time t (min) is shorter than or equal to the time $t_{ret} \times 1.3$.

[3] The gaseous reduction degree measurement method according to [1] or [2], wherein a sum of the concentration of CO and the concentration of $H_2$ in the gaseous reducing agent is 30% by mass or more and 100% by mass or less.

[4] The gaseous reduction degree measurement method according to [1] or [2], wherein the average particle size of the iron raw material is 9 mm or more and 21 mm or less.

[5] The gaseous reduction degree measurement method according to [1] or [2], wherein the reduction temperature is 1073 K or higher and 1273 K or lower.

[6] A blast furnace operating method, the method including: measuring the degree of gaseous reduction using the gaseous reduction degree measurement method according to [1] or [2]; charging into a blast furnace the iron raw material with the measured degree of gaseous reduction being 95% or more; and supplying 100 $Nm^3$/t or more of a gaseous reducing agent to the blast furnace to produce molten pig iron.

[7] A direct reduction shaft furnace operating method, the method including: measuring the degree of gaseous reduction using the gaseous reduction degree measurement method according to [1] or [2]; and charging into a direct reduction shaft furnace the iron raw material with the measured degree of gaseous reduction being 95% or more to produce reduced iron.

[8] An iron raw material subjected to gaseous reduction using a gaseous reducing agent in an ironmaking process, wherein measurement time t (min) used to measure a degree of gaseous reduction of the iron raw material via the gaseous reduction is set to be longer than or equal to $t_{ret} \times 0.9$ to measure the degree of gaseous reduction, where $t_{ret}$ is a time calculated from formula (1) below, and wherein the measured degree of gaseous reduction is 95% or more:

$$t_{ret} = 5 \times d / (X_{CO} - 2 \times X_{CO2} + 2 \times X_{H2} - 4 \times X_{H2O}) \times exp(6000 / T) \tag{1}$$

where T is reduction temperature in K; d is an average particle size mm of the iron raw material; $X_{CO}$ is a concentration % of CO in the gaseous reducing agent; $X_{CO2}$ is a concentration % of $CO_2$ in the gaseous reducing agent; $X_{H2}$ is a concentration % of $H_2$ in the gaseous reducing agent; and $X_{H2O}$ is a concentration % of $H_2O$ in the gaseous reducing agent.

Advantageous Effects of Invention

According to the present invention, the degree of gaseous reduction of the iron raw material used in the ironmaking process can be appropriately measured with consideration given to the influence of stagnation of the reduction reaction.

Brief Description of Drawings

[Fig. 1] Fig. 1 is an illustration showing a charging state of a gaseous reducing agent and a charging state of a solid reducing agent in a blast furnace.
[Fig. 2] Fig. 2 is a graph showing the relation between the amount of the gaseous reducing agent and an optimal gaseous reduction degree.
[Fig. 3] Fig. 3 is a graph showing the results of gaseous reduction tests performed on samples (agglomerated ores) under test conditions A.

[Fig. 4] Fig. 4 is a graph showing the results of gaseous reduction tests performed on samples (agglomerated ores) under test conditions B.

[Fig. 5] Fig. 5 is a graph showing the results of gaseous reduction tests performed on samples (agglomerated ore 1) under different test conditions.

Description of Embodiments

The present invention will next be described using embodiments of the invention.

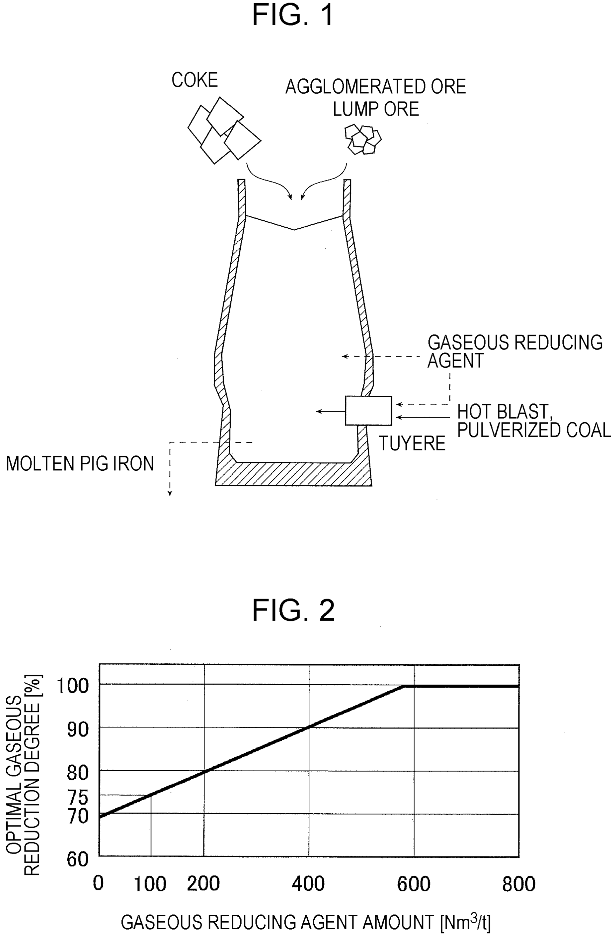

The present invention relates to a reduction reaction performed in an ironmaking process on an iron raw material containing agglomerated ore, lump ore, etc. (which are hereinafter referred to as the "iron raw material") using a gaseous reducing agent blown into the furnace as shown, for example, in Fig. 1 and more particularly to a method for measuring the gaseous reduction degree of the iron raw material.

The present inventors have first focused on the relation between the amount of the blown gaseous reducing agent (hereinafter referred to as the "gaseous reducing agent amount") and a gaseous reduction degree. In particular, the inventors have focused on the relation between the gaseous reducing agent amount and the gaseous reduction degree when the total of the amount of a solid reducing agent used (which is hereinafter referred to as the "solid reducing agent amount") and the gaseous reducing agent amount is minimized (this gaseous reduction degree is hereinafter referred to as the "optimal gaseous reduction degree"). Then the inventors have calculated the optimal gaseous reduction degree % with respect to the gaseous reducing agent amount $Nm^3/t$ based on a heat and material balance calculation in consideration of the reduction equilibrium of wustite by carbon monoxide (CO) and hydrogen gas (see Non Patent Literature 1 and Non Patent Literature 2). Here, the optimal gaseous reduction degree is the value obtained to minimize the total amount of the reducing agents (the total of the solid reducing agent amount and the gaseous reducing agent amount) from the viewpoint of the supply of heat and the functions of the reducing agents in the furnace and is calculated each time based on the amounts of the reducing agents used (the solid reducing agent amount and the gaseous reducing agent amount).

The gaseous reduction degree means the proportion of gaseous reduction in the total reduction reaction when the iron raw material undergoes the reduction reaction. The gaseous reducing agent may include not only gases such as hydrogen and carbon monoxide (CO) that themselves function as gaseous reducing agents but also gases such as methane and ammonia that function as gaseous reducing agents through oxidation reactions or thermal decomposition reactions.

Regarding the gaseous reducing agent amount, when, for example, 1 $Nm^3$ of methane is blown into the furnace, the methane reacts with oxygen in the blast air to generate 1 $Nm^3$ of carbon monoxide and 2 $Nm^3$ of hydrogen. In this case, the total amount of the gaseous reducing agents generated is 3 $Nm^3$. Therefore, when 1 $Nm^3$ of methane is blown into the furnace, the gaseous reducing agent amount is counted as 3 $Nm^3$.

When, for example, 1 $Nm^3$ of ammonia is blown into the furnace, the ammonia thermally decomposes into 1.5 $Nm^3$ of hydrogen and 0.5 $Nm^3$ of nitrogen. Since nitrogen does not function as a reducing agent, the gaseous reducing agent amount when 1 $Nm^3$ of ammonia is blown into the furnace is counted as 1.5 $Nm^3$.

The gaseous reducing agent may contain impurities such as nitrogen. In this case also, the gaseous reducing agent amount is counted based on the amount of the gaseous reducing agent generated in the furnace. Therefore, the gaseous reducing agent may be a mixture of a plurality of types of gases.

The temperature of the gaseous reducing agent is preferably lower than or equal to 1300°C, which is the hot blast air temperature in the furnace. To adjust the optimal gaseous reduction degree to be higher than the reduction degree at which stagnation of the reduction reaction via gaseous reduction occurs (reduction degree: 70%), the temperature of the gaseous reducing agent is more preferably lower than or equal to 500°C and still more preferably lower than or equal to 100°C.

The concentration of the gaseous reducing agent actually contributing to the gaseous reduction in the gaseous reducing agent blown into the furnace is preferably 90% by volume or more and more preferably 95% by volume or more.

The optimal gaseous reduction degree with respect to the gaseous reducing agent amount was calculated as follows. The gaseous reducing agent (assumed to be 100% normal temperature hydrogen) was blown into a blast furnace with a thermal reserve zone temperature of 1000°C, a blast air temperature of 1100°C, a blast air moisture content of 20 $g/Nm^3$, and a heat loss of 100 Mcal/t, and the gaseous reduction degree at which the solid reducing agent amount was minimized was calculated. In this case, the maximum value of the shaft efficiency was set to 0.95 [-: dimensionless number].

Fig. 2 shows the relation between the gaseous reducing agent amount $Nm^3/t$ and the optimal gaseous reduction degree %. As can be seen in Fig. 2, when the gaseous reducing agent amount exceeds 100 $Nm^3/t$, the optimal gaseous reduction degree exceeds 75%. Specifically, as can be seen, when the gaseous reducing agent amount exceeds 100 $Nm^3/t$, the optimal gaseous reduction degree exceeds the reduction degree in a state in which stagnation of the reduction reaction of the iron raw material via gaseous reduction occurs (reduction degree: 70%). As the gaseous reducing agent amount increases, the amount of reduction in $CO_2$ during the operation of the blast furnace increases. However, the change in the amount of reduction in $CO_2$ is saturated beyond a certain point. Therefore, the gaseous reducing agent amount is preferably 800 $Nm^3/t$ or less and more preferably 600 $Nm^3/t$ or less.

In the direct reduction process, the gaseous reduction degree of the product, that is, the reduced iron, must be 80% to 90%, as described above. Therefore, when the gaseous reduction degree reaches 70% during gaseous reduction of the iron raw material and stagnation of the reduction reaction occurs, the quality of the product deteriorates, or the productivity decreases.

Next, the inventors produced various agglomerated ores used as iron raw materials and conducted reduction reaction tests on the produced iron raw materials (agglomerated ores) under various conditions to examine an appropriate method for measuring the gaseous reduction degree during gaseous reduction of the iron raw materials.

Specifically, different amounts of raw materials were mixed to control the chemical compositions of the agglomerated ores. Moreover, different firing times and air supply gases with different oxygen concentrations were used to produce agglomerated ores. Each of the agglomerated ores was produced by mixing the prepared raw materials, granulating the mixture, and subjecting the granulated mixture to a sinter pot test to sinter the mixture. The agglomerated ores were classified according to their particle size and then subjected to the reduction tests.

Each of the produced iron raw materials (agglomerated ores) was heated and held at a given temperature. Then a gaseous reducing agent was caused to flow through the iron raw material, and the changes in the mass were measured to obtain a reduction degree curve based on the changes in the mass. In this case, different reduction temperatures, gaseous reducing agents with different chemical compositions, and samples with different particle sizes were used to measure the changes in the masses of the agglomerated ores. Moreover, samples of the same type (the same agglomerated ore) were tested under different conditions.

Regarding the gaseous reduction test conditions using the gaseous reducing agents, the reduction temperature was varied within the range of 1073 to 1173 K, and samples (agglomerated ores) with different average particle sizes ranging from 10 to 20 mm were used. The average particle size means a harmonic mean size. Regarding the chemical compositions of the gaseous reducing agents, carbon monoxide (CO) was varied within the range of 0 to 95% by mass, and carbon dioxide ($CO_2$) was varied within the range of 0 to 5% by mass. Hydrogen ($H_2$) was varied within the range of 0 to 100% by mass, and nitrogen ($N_2$) was varied within the range of 0 to 70% by mass.

Regarding the other conditions for the gaseous reduction tests performed using the gaseous reducing agents, the maximum reduction time was set to 5 hours (300 minutes), and the flow rate of each gaseous reducing agent was set to 15 L/min. The initial mass of each sample (agglomerated ore) was set to 150 g.

The temporal change in the gaseous reduction degree R during the test was calculated based on the temporal change in the mass of the iron raw material (agglomerated ore) detected during the test. Specifically, the gaseous reduction degree R was calculated by representing the ratio of oxygen removed from the iron raw material (the agglomerated ore) by mass percent % and converting the change in mass to the gaseous reduction degree R based on "JIS M 8713:2021 Iron ores - Determination of reducibility by the final degree of reduction index" using the following formula (2).

[Math 1]

$$R\,(\%) = \frac{\text{Mass removed by reduction (g)}}{\begin{array}{c}\text{Mass of oxygen that was bonded to iron in}\\\text{measurement sample prior to reduction (g)}\end{array}} \times 100 \quad \cdots (2)$$

The reduction degree curve obtained by the gaseous reduction test was analyzed using a reduction model that does not consider the stagnation of the reduction reaction (unreacted core model: see Non Patent Literature 3) to calculate the gaseous reduction degree at which the stagnation of the reduction reaction begins (this gaseous reduction degree is hereinafter referred to as the "stagnant gaseous reduction degree"). Specifically, the reduction degree curve obtained as the test results was fitted to the reduction model, and the gaseous reduction degree at which the reduction degree curve began to deviate from the reduction model was regarded as the onset of stagnation of the reduction reaction.

Then, based on the time point when the gaseous reduction degree (stagnant gaseous reduction degree) at which the reduction reaction was considered to begin stagnating was reached, the time point at which the influence of the stagnation of the reduction reaction became evaluable was defined as the time $t_{ret}$ (min) at which the stagnation of the reduction reaction became observable.

The time $t_{ret}$ (min) at which the stagnation of the reduction reaction becomes observable can be calculated using formula (1) below based on the chemical composition of the gaseous reducing agent used for gaseous reduction. In formula (1), $(X_{CO} - 2 \times X_{CO2} + 2 \times X_{H2} - 4 \times X_{H2O})$ is a coefficient and may be set based on the fact that the relation between the rate of reduction by carbon monoxide (CO) and the rate of reduction by hydrogen ($H_2$) is about 1:2 and that the relation between the chemical composition of $CO/CO_2$ or $H_2/H_2O$ at the equilibrium of Fe-FeO is about 2:1. The value "6000" in exp(6000 / T) may be determined based on experiments for examining the temperature dependence using several sintered ores. The value "5" in 5 × d may be determined as follows. A plurality of reduction experiments is performed (under prescribed gas component and temperature conditions). For each of the conditions, the test time at which the gaseous reduction degree is found to exceed the stagnant gaseous reduction degree is determined, and the coefficient is determined such that the test time does not exceed the determined time and may be set to "5."

$$t_{ret} = 5 \times d/(X_{CO} - 2 \times X_{CO2} + 2 \times X_{H2} - 4 \times X_{H2O}) \times \exp(6000/T) \tag{1}$$

In formula (1), T is the reduction temperature K, and d is the average particle size mm of the iron raw material. $X_{CO}$ is the concentration % of CO in the gaseous reducing agent, and $X_{CO2}$ is the concentration % of $CO_2$ in the gaseous reducing agent. $X_{H2}$ is the concentration % of $H_2$ in the gaseous reducing agent, and $X_{H2O}$ is the concentration % of $H_2O$ in the gaseous reducing agent.

The chemical composition ratios of the samples (agglomerated ores) used for the gaseous reduction tests are shown in Table 1. The conditions for the gaseous reduction tests are shown in Table 2. As shown in Table 2, in test conditions (A to D), gaseous reducing agents with different chemical composition ratios were used for gaseous reduction, and different reduction temperatures for gaseous reduction and samples (agglomerated ores) with different particle sizes were used. Each "time $t_{ret}$" in Table 2 is a value calculated by applying the chemical composition ratios of the corresponding gaseous reducing agent etc. to formula (1). "Test conditions D" shown in Table 2 correspond to conventional gaseous reduction test conditions in "Iron ores - Determination of reducibility by the final degree of reduction index (JIS M 8713:2009)."

[Table 1]

| Iron raw material | T.Fe [% by mass] | FeO [% by mass] | CaO [% by mass] | SiO$_2$ [% by mass] | Al$_2$O$_3$ [% by mass] | MgO [% by mass] |
|---|---|---|---|---|---|---|
| Agglomerated ore 1 | 57.68 | 7.54 | 10.33 | 4.91 | 1.61 | 0.49 |
| Agglomerated ore 2 | 66.07 | 0.73 | 2.14 | 2.51 | 0.39 | 0.07 |
| Agglomerated ore 3 | 68.07 | 0.40 | 0.82 | 3.20 | 0.80 | 0.10 |
| Agglomerated ore 4 | 57.38 | 14.41 | 10.93 | 5.77 | 1.83 | 0.53 |
| Agglomerated ore 5 | 57.45 | 1.14 | 10.27 | 4.86 | 1.53 | 0.47 |
| Agglomerated ore 6 | 55.15 | 6.45 | 12.47 | 4.26 | 1.31 | 0.40 |

[Table 2]

| | Reduction temperature [K] | CO ratio [% by mass] | CO$_2$ ratio [% by mass] | H$_2$ ratio [% by mass] | H$_2$O ratio [% by mass] | N$_2$ ratio [% by mass] | Average particle size of sample (harmonic mean size) [mm] | Time t$_{ret}$ [min] |
|---|---|---|---|---|---|---|---|---|
| Test conditions A | 1173 | 0 | 0 | 100 | 0 | 0 | 12 | 50 |
| Test conditions B | 1173 | 95 | 5 | 0 | 0 | 0 | 10 | 98 |
| Test conditions C | 1073 | 70 | 5 | 20 | 5 | 0 | 10 | 168 |
| Test conditions D | 1173 | 30 | 0 | 0 | 0 | 70 | 20 | 555 |

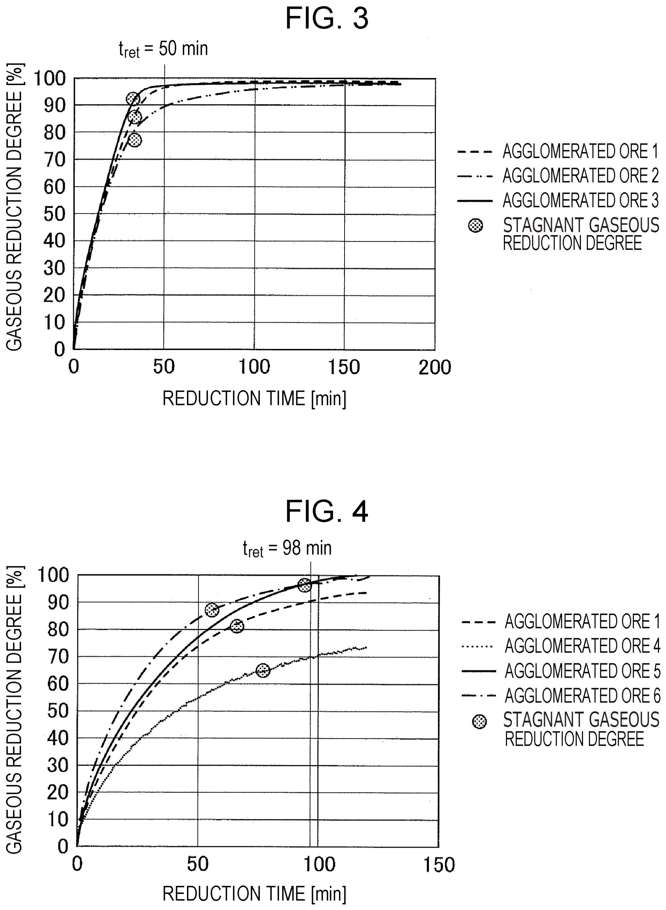

Fig. 3 shows the results of the gaseous reduction tests on samples (agglomerated ores) under test conditions A. In test conditions A, the reduction temperature was set to 900°C (1173 K), and the particle size of each sample (agglomerated ore) was set to 12 mm. Regarding the chemical composition of the gaseous reducing agent used for the tests, 100% by volume hydrogen ($H_2$) was used. In the gaseous reduction tests performed under test conditions A, agglomerated ores 1 to 3 shown in Table 1 were used as the samples.

As shown in Fig. 3, in test conditions A, the "time $t_{ret}$" is 50 minutes. Since the "time $t_{ret}$" was set to 50 minutes, the reduction degree curve of the gaseous reduction degree of each of the agglomerated ores 1 to 3 could be measured in the range including the stagnant gaseous reduction degree and extending to the time point at which the change in the gaseous reduction degree settled down, as shown in Fig. 3. Specifically, the gaseous reduction degrees of the agglomerated ores 1 to 3 used as the samples could be appropriately measured, with consideration given to the influence of the stagnation of the reduction reaction. More specifically, the values on the reduction degree curves at the "time $t_{ret}$," that is, 50 minutes, could be determined as the gaseous reduction degrees of the agglomerated ores 1 to 3.

Fig. 4 shows the results of the gaseous reduction tests on samples (agglomerated ores) under test conditions B. In test conditions B, the reduction temperature was set to 900°C (1173 K), and the particle size of each sample (agglomerated ore) was set to 10 mm. Regarding the chemical composition of the gaseous reducing agent used for the tests, 95% of carbon monoxide (CO) and 5% of carbon dioxide ($CO_2$) were used. In the gaseous reduction tests performed under test conditions B, agglomerated ores 1 and 4 to 6 shown in Table 1 were used as the samples.

As shown in Table 2, in test conditions B, the "time $t_{ret}$" is 98 minutes. Since the "time $t_{ret}$" was set to 98 minutes, the reduction degree curve of the gaseous reduction degree of each of the agglomerated ores 1 and 4 to 6 could be measured in the range including the stagnant gaseous reduction degree and extending to the time point at which the change in the gaseous reduction degree settled down, as shown in Fig. 4. Specifically, the gaseous reduction degrees of the agglomerated ores 1 and 4 to 6 used as the samples could be appropriately measured, with consideration given to the influence of the stagnation of the reduction reaction. More specifically, the values on the reduction degree curves at the "time $t_{ret}$," that is, 98 minutes, could be determined as the gaseous reduction degrees of the agglomerated ores 1 and 4 to 6.

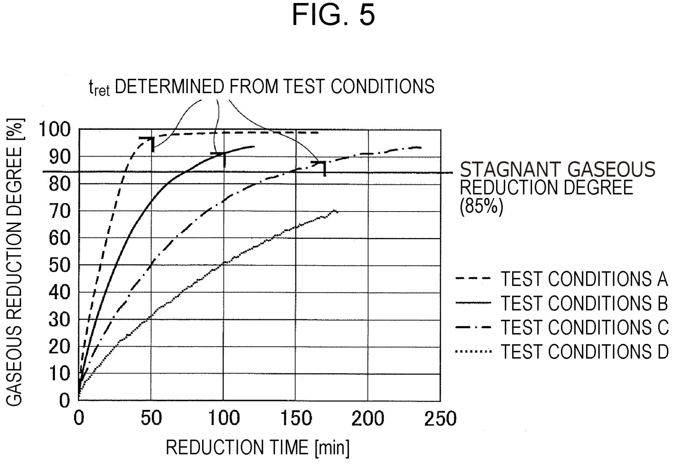

Fig. 5 shows the results of the gaseous reduction tests performed on the agglomerated ore 1 used as the sample under different test conditions. The upper limit of the test time was set to 180 minutes, which is the measurement time described in the conventional gaseous reduction test conditions "Iron ores - Determination of reducibility by the final degree of reduction index (JIS M 8713:2009)." Under test conditions A to C, the gaseous reduction degree of the agglomerated ore 1 was measured based on the "time $t_{ret}$," and the reduction degree curves of the gaseous reduction degrees of the agglomerated ore 1 could be measured in the range including the stagnant gaseous reduction degree (85%) of the agglomerated ore 1 and extending to the time point at which the change in the gaseous reduction degree settled down, as shown in Fig. 5. More specifically, the gaseous reduction degrees of the agglomerated ore 1 used as the samples could be appropriately measured, with consideration given to the influence of the stagnation of the reduction reaction.

Specifically, for each of test conditions A to C, the gaseous reduction degree of the agglomerated ore 1 when the gaseous reduction was performed using the corresponding gaseous reducing agent could be measured. More specifically, for each of test conditions A to C, the value on the reduction degree curve at the "time $t_{ret}$" could be determined as the gaseous reduction degree of the agglomerated ore 1 under the test conditions.

In test conditions D, the upper limit of the measurement time was 180 minutes. Therefore, the gaseous reduction of the agglomerated ore 1 did not proceed to the stagnant gaseous reduction degree at which the stagnation of the reduction reaction occurred. In this case, the reduction degree curve of the gaseous reduction degree could not include the stagnant gaseous reduction degree, and the measurement could not be continued up to the time point at which the change in the gaseous reduction degree settled down.

As shown in Figs. 3 to 5, even when iron raw materials (agglomerated ores) with different chemical compositions and properties were used as samples and different test conditions were used, the gaseous reduction degree could be measured within the range including the stagnant gaseous reduction degree and extending to the time point at which the change in the gaseous reduction degree settled down by performing the gaseous reduction test based on the "time $t_{ret}$" calculable using formula (1). Therefore, by performing the gaseous reduction test based on the "time $t_{ret}$" calculable using formula (1), the gaseous reduction degree of an iron raw material (agglomerated ore) can be appropriately measured with consideration given to the influence of the stagnation of the reduction reaction. Specifically, the value on the reduction degree curve at the "time $t_{ret}$" could be determined as the gaseous reduction degree of the iron raw material (agglomerated ore).

The measurement time t (min) for measuring the gaseous reduction degree of an iron raw material is preferably longer than or equal to the time $t_{ret} \times 0.9$. Specifically, a reference time point is defined as time $t_{ret}$ minus 10% of time $t_{ret}$ (as time $t_{ret} \times 0.9$). Then the reduction degree curve of the gaseous reduction degree at measurement time points t (min) after the reference time point is used, and the value on this reduction degree curve at any time point may be used as the gaseous reduction degree of the iron raw material. In this case, the gaseous reduction degree of the iron raw material used for the test can be obtained more accurately. Even when the measurement time t (min) for measuring the gaseous reduction degree of the iron raw material is set to time $t_{ret} \times 0.9$ and the value on the reduction degree curve at this measurement time is identified as the gaseous reduction degree of the iron raw material, the gaseous reduction degree calculated can be higher than the stagnant gaseous reduction degree of the iron raw material.

When the reduction degree curve of the gaseous reduction degree of an iron raw material (agglomerated ore) is used to measure the gaseous reduction degree, if the measurement time of the gaseous reduction degree is excessively long, the gaseous reduction degree of the iron raw material asymptotically approaches close to 100%, and this makes it difficult to measure the gaseous reduction degree accurately from the operational point of view. Therefore, the measurement time t (min) for measuring the gaseous reduction degree of the iron raw material is preferably shorter than or equal to time $t_{ret} \times 1.3$.

The total of the CO concentration and the $H_2$ concentration in formula (1) is preferably 30% by mass or more, which is a value specified in the conventional gaseous reduction test conditions "Iron ores - Determination of reducibility by the final degree of reduction index (JIS M 8713:2009)," and is more preferably 80% by mass or more and 100% by mass or less, from the viewpoint of the test time for the gaseous reduction degree of the iron raw material.

The reduction temperature in formula (1) is set to preferably 1073 K or higher and 1273 K or lower, which is a main temperature in the blast furnace process and the direct reduction process, and is set to more preferably 1073 K or higher and 1173 K or lower, from the viewpoint of reducing the cost of the reduction test. The average particle size of the iron raw material in formula (1) is preferably 9 mm or more and 21 mm or less, which is the range of the average particle size of the iron raw material that can be actually charged in the blast furnace process and the direct reduction process, and is more preferably 9 mm or more and 15 mm or less, from the viewpoint of the test time for the gaseous reduction degree of the iron raw material. The average particle size of the iron raw material is its mean harmonic size.

As described above, the value on the reduction degree curve at the time $t_{ret}$ is identified as the gaseous reduction degree of the iron raw material, and the iron raw material with the identified gaseous reduction degree may be applied to the ironmaking process.

The value on the reduction degree curve at a time point equal to or after time $t_{ret} \times 0.9$ (a measurement time point t (min) after the reference time point defined as time $t_{ret}$ minus 10% of time $t_{ret}$) may be identified as the gaseous reduction degree of the iron raw material, and the iron raw material with the identified gaseous reduction degree may be applied to the ironmaking process.

Before the operation of the ironmaking process, an iron raw material with its gaseous reduction degree identified may be prepared in advance. Specifically, an agglomerated ore used as the iron raw material to be subjected to gaseous reduction using a gaseous reducing agent in the ironmaking process is prepared. The time $t_{ret}$ calculated from formula (1) is used as the measurement time t (min) for measuring the gaseous reduction degree of the iron raw material via gaseous reduction, and then the gaseous reduction degree is measured. The iron raw material with a measured gaseous reduction degree of 95% or more may be used for the subsequent operation of the ironmaking process.

As described above, according to the gaseous reduction degree measurement method, the blast furnace operating method, the direct reduction shaft furnace operating method, and the iron raw material in the above embodiments, the gaseous reduction degree of the iron raw material used in the ironmaking process including the blast furnace process or the direct reduction process can be measured appropriately, with consideration given to the influence of the stagnation of the reduction reaction. By using the iron raw material subjected to the appropriate measurement for the ironmaking process, the $CO_2$ emissions can be reduced, and a reduction in the productivity in the ironmaking process can be prevented. Moreover, the quality of the product obtained through the ironmaking process can be improved.

EXAMPLES

Examples performed based on the gaseous reduction degree measurement method and the iron raw material according to the preceding embodiments will be described.

In the Examples, a virtual physical blast furnace and a virtual physical direct reduction shaft furnace constructed in a cyberspace were used to examine the measurability of appropriate gaseous reduction degrees of iron raw materials (agglomerated ores) with different chemical compositions and properties.

The gaseous reduction degree of each agglomerated ore was measured using two different methods, that is, a conventional measurement method (Iron ores - Determination of reducibility by the final degree of reduction index (JIS M 8713:2009)) and the gaseous reduction degree measurement method according to the invention. Regarding the gaseous reduction behaviors in the virtual physical blast furnace and the virtual physical direct reduction shaft furnace, reference was made to Non Patent Literature 4, and calculation parameters were determined such that the calculation results were consistent with the test results (Tables 1 and 2 and Figs. 3 to 5). In Tables 3 and 4, the conventional measurement method (JIS M 8713:2009) is indicated as "Gaseous reduction degree (conventional)," and the gaseous reduction degree measurement method according to the present invention is indicated as "Gaseous reduction degree (present invention)."

First, the gaseous reduction degree in the blast furnace process was measured as follows. In reference operation 1 used as a reference for the $CO_2$ reduction ratio, a hot air blast was used. The blast temperature was set to 1100°C, and the oxygen concentration was set to 21%. The blast air moisture content was set to 20 g/$Nm^3$, and the heat loss was set to 100 Mcal/t. The ratio of solid reducing agents defined as the sum of a pulverized coal ratio and a coke ratio was set to 487 kg/t. Reference operations 2 to 3, Comparative Example 1, and Inventive Examples 1 to 3 were performed under the operating conditions for reference operation 1, and a gaseous reducing agent was also blown from tuyeres.

The gaseous reduction degree (the present invention) was measured under the "test conditions B" shown in Table 2. Therefore, the time $t_{ret}$ for measuring the gaseous reduction degree was 98 minutes, and the gaseous reduction time was 100 minutes. Specifically, the value of the gaseous reduction degree of each agglomerated ore after a lapse of 100 minutes was used as the gaseous reduction degree of the agglomerated ore. The results of the measurement of the gaseous reduction degree in the blast furnace process in each Example are shown in Table 3.

[Table 3]

| | Operational form | Agglomerated ore | Stagnant gaseous reduction degree [%] | Gaseous reduction degree (conventional) [%] | Gaseous reduction degree (present invention) [%] | Gaseous reducing agent amount [Nm$^3$/t] | Solid reducing agent amount [kg/t] | CO$_2$ reduction ratio [%] | Evaluation |
|---|---|---|---|---|---|---|---|---|---|
| Reference operation 1 | Hot air blast | Agglomerated ore 1 | 85 | 70 | 90 | 0 | 487 | - | - |
| Reference operation 2 | Hot air blast | Agglomerated ore 1 | 85 | 70 | 90 | 200 | 450 | 7 | - |
| Reference operation 3 | Hot air blast | Agglomerated ore 1 | 85 | 70 | 90 | 400 | 430 | 12 | - |
| Comparative Example 1 | Hot air blast | Agglomerated ore 3 | 92 | 75 | 93 | 200 | 450 | 8 | × |
| Inventive Example 1 | Hot air blast | Agglomerated ore 5 | 96 | 70 | 97 | 200 | 438 | 10 | ○ |
| Inventive Example 2 | Hot air blast | Agglomerated ore 5 | 96 | 70 | 97 | 400 | 390 | 20 | ○ |
| Inventive Example 3 | Hot air blast | Agglomerated ore 6 | 88 | 75 | 95 | 200 | 438 | 10 | ○ |

As shown in Table 3, the gaseous reduction degrees of the agglomerated ore 1 in reference operations 1 to 3 were 70% as measured based on the gaseous reduction degree (conventional) and were 90% as measured based on the gaseous reduction degree (the present invention). The stagnant gaseous reduction degrees shown in Table 3 are stagnant gaseous reduction degrees determined for the agglomerated ores used in the Examples.

The "Evaluation" in Table 3 was performed based on the comparison among the gaseous reduction degrees of a plurality of agglomerated ores. A "good (○)" rating was given when the agglomerated ore used showed a high gaseous reduction degree and the $CO_2$ reduction ratio was improved. Otherwise, a "poor (×)" rating was given.

In reference operations 1 to 3, the operational form was a hot air blast, and different gaseous reducing agent amounts were used. As shown in Table 3, as the gaseous reducing agent amount increases, the $CO_2$ reduction ratio increases.

The gaseous reducing agent amount in Comparative Example 1 was the same as that in reference operation 2, but the gaseous reduction degree (conventional) was higher in Comparative Example 1. However, in Comparative Example 1, the gaseous reduction degree (conventional) was lower than the stagnant gaseous reduction degree, and the $CO_2$ reduction ratio was comparable to that in reference operation 2.

The gaseous reducing agent amount in Inventive Example 1 was the same as that in reference operation 2. Although the gaseous reduction degree (conventional) in Inventive Example 1 was the same as that in reference operation 2, the gaseous reduction degree (the present invention) was higher in Inventive Example 1. In Inventive Example 1, the gaseous reduction degree (the present invention) was higher than the stagnant gaseous reduction degree, and the $CO_2$ reduction ratio was higher than that in reference operation 2. The gaseous reducing agent amount in Inventive Example 2 was the same as that in reference operation 3. Although the gaseous reduction degree (conventional) in Inventive Example 2 was the same as that in reference operation 3, the gaseous reduction degree (the present invention) was higher in Inventive Example 2. In Inventive Example 2, the gaseous reduction degree (the present invention) was higher than the stagnant gaseous reduction degree, and the $CO_2$ reduction ratio was higher than that in reference operation 3. The gaseous reducing agent amount in Inventive Example 3 was the same as that in reference operation 2. In Inventive Example 3, both the gaseous reduction degree (conventional) and the gaseous reduction degree (the present invention) were higher than those in reference operation 2. The gaseous reduction degree (the present invention) was higher than the stagnant gaseous reduction degree, and the $CO_2$ reduction ratio was higher than that in reference operation 2.

As can be seen from the above, with the gaseous reduction degree measurement method according to the invention, the gaseous reduction degree of an iron raw material (agglomerated ore) can be appropriately measured with consideration given to the influence of the stagnation of the reduction reaction. By using the iron raw material (agglomerated ore) with the gaseous reduction degree appropriately measured by the gaseous reduction degree measurement method according to the invention, the $CO_2$ emissions can be reduced.

More specifically, since the gaseous reduction degree of the iron raw material (agglomerated ore) can be appropriately measured even in the range higher than the stagnant gaseous reduction degree, the evaluation (measurement) can be performed with consideration given to the influence of the stagnation of the reduction reaction via gaseous reduction. When an iron raw material (agglomerated ore) selected according to the gaseous reduction degree (conventional) is charged into a blast furnace, the amount of reduction in $CO_2$ emissions is small. However, when an iron raw material (agglomerated ore) selected according to the gaseous reduction degree (the present invention) is charged into the blast furnace, the amount of reduction in $CO_2$ emissions can be increased. For example, molten pig iron may be produced by the blast furnace operating method as follows. The gaseous reduction degree measurement method according to the invention is used to measure the gaseous reduction degree, and the iron raw material (the agglomerated ore 5 or 6) with a measured gaseous reduction degree of 95% or more is charged into the blast furnace, and 100 $Nm^3$/t or more of a gaseous reducing agent is supplied to the blast furnace.

Next, the gaseous reduction degree in the direct reduction process was measured as follows. Regarding the production amount of reduced iron, the production amount in the reference operation was used as the reference and set to 1.0, as shown in Table 4. Then the agglomerated ore 1 used in the reference operation was replaced with other agglomerated ores with different gaseous reduction degrees (conventional) and different gaseous reduction degrees (the present invention). Then the change in the reduction degree in each product was examined, and the measurability of the appropriate gaseous reduction degree was also examined.

The gaseous reduction degree (the present invention) was measured under the "test conditions B" shown in Table 2. Therefore, the time $t_{ret}$ for measuring the gaseous reduction degree was 98 minutes, and the gaseous reduction time was 100 minutes. Specifically, the value of the gaseous reduction degree of each agglomerated ore after a lapse of 100 minutes was used as the gaseous reduction degree of the agglomerated ore. The results of the measurement of the gaseous reduction degree in the direct reduction process in each Example are shown in Table 4.

[Table 4]

| | Agglomerated ore | Stagnant gaseous reduction degree [%] | Gaseous reduction degree (conventional) [%] | Gaseous reduction degree (present invention) [%] | Amount of production [ton] | Reduction degree of product [%] | Evaluation |
|---|---|---|---|---|---|---|---|
| Reference operation | Agglomerated ore 1 | 85 | 70 | 90 | 1.0 | 85 | - |
| Comparative Example 1 | Agglomerated ore 3 | 92 | 75 | 93 | 1.0 | 86 | × |
| Inventive Example 1 | Agglomerated ore 5 | 96 | 70 | 97 | 1.0 | 90 | ○ |
| Inventive Example 2 | Agglomerated ore 5 | 96 | 70 | 97 | 1.1 | 85 | ○ |
| Inventive Example 3 | Agglomerated ore 6 | 88 | 75 | 95 | 1.0 | 90 | ○ |

As shown in Table 4, the gaseous reduction degree of the agglomerated ore 1 in the reference operation was 70% as measured based on the gaseous reduction degree (conventional) and was 90% as measured based on the gaseous reduction degree (the present invention). The stagnant gaseous reduction degrees shown in Table 4 are stagnant gaseous reduction degrees of the agglomerated ores used in the Examples.

The "Evaluation" in Table 4 was performed based on the comparison with the reference reduction degree of the product or the reference production amount in the reference operation. A "good (○)" rating was given when an improved value was obtained. Otherwise, a "poor (×)" rating was given.

In Comparative Example 1, the gaseous reduction degree (conventional) was higher than that in the reference operation. However, the gaseous reduction degree (conventional) was lower than the stagnant gaseous reduction degree, and the reduction degree of the product was about the same as that in the reference operation.

In Inventive Example 1, the gaseous reduction degree (conventional) was the same as that in the reference operation, but the gaseous reduction degree (the present invention) was higher. Moreover, the gaseous reduction degree (the present invention) was higher than the stagnant gaseous reduction degree, and the reduction degree of the product was higher than that in the reference operation. In Inventive Example 2, the gaseous reduction degree (conventional) was the same as that in the reference operation, but the gaseous reduction degree (the present invention) was higher. Moreover, the gaseous reduction degree (the present invention) was higher than the stagnant gaseous reduction degree. The product reduction degree was the same as that in the reference operation, and the production amount was higher. In Inventive Example 3, both the gaseous reduction degree (conventional) and the gaseous reduction degree (the present invention) were higher than those in the reference operation. The gaseous reduction degree (the present invention) was higher than the stagnant gaseous reduction degree, and the reduction degree of the product was higher than that in the reference operation.

As can be seen from the above, with the gaseous reduction degree measurement method according to the invention, the gaseous reduction degree of an iron raw material (agglomerated ore) can be appropriately measured with consideration given to the influence of the stagnation of the reduction reaction. By using the iron raw material (agglomerated ore) with the gaseous reduction degree appropriately measured by the gaseous reduction degree measurement method according to the invention, the reduction degree of the product or the production amount can be improved.

More specifically, since the gaseous reduction degree of the iron raw material (agglomerated ore) can be appropriately measured even in the range higher than the stagnant gaseous reduction degree, the evaluation (measurement) can be performed with consideration given to the influence of the stagnation of the reduction reaction via gaseous reduction. When an iron raw material (agglomerated ore) selected according to the gaseous reduction degree (conventional) is charged into a direct reduction shaft furnace, the effect of improving the reduction degree of the product cannot be obtained. However, when an iron raw material (agglomerated ore) selected according to the gaseous reduction degree (the present invention) is charged into the direct reduction shaft furnace, the reduction degree of the product or the production amount can be improved. For example, reduced iron may be produced by the direct reduction shaft furnace operating method as follows. The gaseous reduction degree measurement method according to the invention is used to measure the gaseous reduction degree, and the iron raw material (agglomerated ore 5 or 6) with a measured gaseous reduction degree of 95% or more is charged into the direct reduction shaft furnace.

**Claims**

1. A gaseous reduction degree measurement method for measuring a degree of gaseous reduction of an iron raw material used in an ironmaking process, the gaseous reduction being performed using a gaseous reducing agent,

   wherein measurement time t (min) for measuring the degree of gaseous reduction of the iron raw material is longer than or equal to $t_{ret} \times 0.9$, where $t_{ret}$ is a time calculated from the following formula (1):

   $$t_{ret} = 5 \times d/(X_{CO} - 2 \times X_{CO2} + 2 \times X_{H2} - 4 \times X_{H2O}) \times \exp(6000/T) \tag{1}$$

   where T is reduction temperature in K; d is an average particle size mm of the iron raw material; $X_{CO}$ is a concentration % of CO in the gaseous reducing agent; $X_{CO2}$ is a concentration % of $CO_2$ in the gaseous reducing agent; $X_{H2}$ is a concentration % of $H_2$ in the gaseous reducing agent; and $X_{H2O}$ is a concentration % of $H_2O$ in the gaseous reducing agent.

2. The gaseous reduction degree measurement method according to claim 1, wherein the measurement time t (min) is shorter than or equal to the time $t_{ret} \times 1.3$.

3. The gaseous reduction degree measurement method according to claim 1 or 2, wherein a sum of the concentration of CO and the concentration of $H_2$ in the gaseous reducing agent is 30% by mass or more and 100% by mass or less.

4. The gaseous reduction degree measurement method according to claim 1 or 2, wherein the average particle size of the iron raw material is 9 mm or more and 21 mm or less.

5. The gaseous reduction degree measurement method according to claim 1 or 2, wherein the reduction temperature is 1073 K or higher and 1273 K or lower.

6. A blast furnace operating method, the method comprising: measuring the degree of gaseous reduction using the gaseous reduction degree measurement method according to claim 1 or 2; charging into a blast furnace the iron raw material with the measured degree of gaseous reduction being 95% or more; and supplying 100 $Nm^3/t$ or more of a gaseous reducing agent to the blast furnace to produce molten pig iron.

7. A direct reduction shaft furnace operating method, the method comprising: measuring the degree of gaseous reduction using the gaseous reduction degree measurement method according to claim 1 or 2; and charging into a direct reduction shaft furnace the iron raw material with the measured degree of gaseous reduction being 95% or more to produce reduced iron.

8. An iron raw material subjected to gaseous reduction using a gaseous reducing agent in an ironmaking process,

   wherein measurement time t (min) used to measure a degree of gaseous reduction of the iron raw material via the gaseous reduction is set to be longer than or equal to $t_{ret} \times 0.9$ to measure the degree of gaseous reduction, where $t_{ret}$ is a time calculated from formula (1) below, and wherein the measured degree of gaseous reduction is 95% or more:

   $$t_{ret} = 5 \times d/(X_{CO} - 2 \times X_{CO2} + 2 \times X_{H2} - 4 \times X_{H2O}) \times \exp(6000/T) \tag{1}$$

   where T is reduction temperature in K; d is an average particle size mm of the iron raw material; $X_{CO}$ is a concentration % of CO in the gaseous reducing agent; $X_{CO2}$ is a concentration % of $CO_2$ in the gaseous reducing agent; $X_{H2}$ is a concentration % of $H_2$ in the gaseous reducing agent; and $X_{H2O}$ is a concentration % of $H_2O$ in the gaseous reducing agent.

# FIG. 1

COKE

AGGLOMERATED ORE
LUMP ORE

GASEOUS REDUCING
AGENT

HOT BLAST,
PULVERIZED COAL

TUYERE

MOLTEN PIG IRON

# FIG. 2

GASEOUS REDUCING AGENT AMOUNT [Nm³/t]

OPTIMAL GASEOUS REDUCTION DEGREE [%]

# FIG. 3

# FIG. 4

# FIG. 5

$t_{ret}$ DETERMINED FROM TEST CONDITIONS

GASEOUS REDUCTION DEGREE [%]

REDUCTION TIME [min]

STAGNANT GASEOUS REDUCTION DEGREE (85%)

- - - TEST CONDITIONS A
—— TEST CONDITIONS B
—·— TEST CONDITIONS C
········ TEST CONDITIONS D

## INTERNATIONAL SEARCH REPORT

| International application No. |
| --- |
| **PCT/JP2024/025173** |

### A. CLASSIFICATION OF SUBJECT MATTER

*C21B 5/00*(2006.01)i; *C21B 13/02*(2006.01)i
FI:    C21B5/00 321; C21B5/00 302; C21B13/02

According to International Patent Classification (IPC) or to both national classification and IPC

### B. FIELDS SEARCHED

Minimum documentation searched (classification system followed by classification symbols)

C21B5/00; C21B13/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 01-142006 A (NKK CORP.) 02 June 1989 (1989-06-02)<br>entire text | 1-8 |
| A | JP 62-077413 A (NIPPON STEEL CORPORATION) 09 April 1987 (1987-04-09)<br>entire text | 1-8 |
| A | KR 10-2022-0119868 A (INDUSTRY-ACADEMIC COOPERATION FOUNDATION, YONSEI UNIVERSITY) 30 August 2022 (2022-08-30)<br>entire text | 1-8 |

☐ Further documents are listed in the continuation of Box C.      ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"   later document published after the international filing date or priority date and not in conflict with the application but cited to understand the principle or theory underlying the invention

"X"   document of particular relevance; the claimed invention cannot be considered novel or cannot be considered to involve an inventive step when the document is taken alone

"Y"   document of particular relevance; the claimed invention cannot be considered to involve an inventive step when the document is combined with one or more other such documents, such combination being obvious to a person skilled in the art

"&"   document member of the same patent family

| Date of the actual completion of the international search | Date of mailing of the international search report |
| --- | --- |
| **08 August 2024** | **20 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/025173**

| Patent document cited in search report | Publication date (day/month/year) | Patent family member(s) | Publication date (day/month/year) |
|---|---|---|---|
| JP 01-142006 A | 02 June 1989 | (Family: none) | |
| JP 62-077413 A | 09 April 1987 | (Family: none) | |
| KR 10-2022-0119868 A | 30 August 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3077853 B
- JP 7035869 B

**Non-patent literature cited in the description**

- **TETSU** ; **HAGANE**. *Journal of the Iron and Steel Institute of Japan*, 1993, vol. 79 (9), N618
- **TETSU** ; **HAGANE**. *Journal of the Iron and Steel Institute of Japan*, 1993, vol. 79 (10), N711
- **TETSU** ; **HAGANE**. *Journal of the Iron and Steel Institute of Japan*, 1987, vol. 73 (15), 1956
- **TETSU** ; **HAGANE**. *Journal of the Iron and Steel Institute of Japan*, 1983, vol. 69 (3), 363